# EUROPÄISCHE PATENTSCHRIFT

(11) **EP 0 771 716 B1**
(45) Veröffentlichungstag und Bekanntmachung des Hinweises auf die Patenterteilung: **08.03.2000**
(21) Anmeldenummer: 96115958.9
(22) Anmeldetag: 04.10.1996
(51) Int. Cl.: B62D 7/20, F16C 11/06

(54) **Spurstange für Kraftfahrzeuge**
Track rod for motor vehicles
Barre d'accouplement pour direction de véhicules à moteur

(30) Priorität: 03.11.1995 DE 19540994
(43) Veröffentlichungstag der Anmeldung: 07.05.1997
(73) Patentinhaber: Lemförder Metallwaren AG, 49448 Lemförde (DE)
(72) Erfinder: Dubielzig, Hans, 49448 Lemförde (DE); Westphal, Paul, 32351 Stemwede (DE); Ungruh, Rainer, 48477 Hörstel (DE)

(56) Entgegenhaltungen:
- DE-A- 2 404 853
- US-A- 1 829 306
- US-A- 4 162 859

## Beschreibung

Die Erfindung bezieht sich auf eine Spurstange für Kraftfahrzeuge, wobei die Spurstange die Merkmale nach dem Oberbegriff des Patentanspruches 1 aufiveist.

Eine solche Spurstange ist aus DE-OS 24 04 853 bekannt. Ein vergleichbarer Stand der Technik ergibt sich auch aus DE 33 15 658 -C2-, US 2,754,141, US 2,324,984, DE 3 821 146 C sowie der US 4,162,859.

Die Längenverstellung der Spurstange zur Spureinstellung erfolgt entweder durch ein einfaches Schraubgewinde oder, im Falle der DE 33 15 658 -C2-, durch ein Spannschloß, bei dem die einander zugekehrten Enden der beiden Teile einer zweiteiligen Spurstange mit gegenläufigem Gewinde in das Muttergewinde einer Spannschraube eingreifen. Aufgrund der symmetrischen Ausbildung ist der Winkelausschlag der Spurstange gegenüber dem Gehäuse des Axialkugelgelenks in allen Richtungen gleich groß.

Aufgabe der Erfindung ist es, in einer Richtung eine Vergrößerung des maximalen Winkelausschlages zu erreichen.

Diese Aufgabe löst die Erfindung bei einer Spurstange nach dem Oberbegriff mit den Ausbildungsmerkmalen nach dem Kennzeichen des Patentanspruches 1.

Eine solche Ausbildung kann durch eine exzentrische Bearbeitung des Kugelzapfens im Halsbereich an seinem Übergang in die Gelenkkugel erreicht werden. Es entsteht dadurch eine Vergrößerung des Ausschlagwinkels in einer beliebigen Richtung, zum Beispiel in Ausfederrichtung, um beim Aushängen des Federbeines das Verbiegen der Spurstange zu verhindern bzw. die Demontage der Spurstange zu vermeiden. Vorzugsweise werden die Ausbildungsmerkmale nach dem Patentanspruch 1 bei einer Spurstange aus zwei Teilen angewendet, die innerhalb einer Gewindemutter eines Spannschlosses zur Längenverstellung axial verschieblich, jedoch drehfest mit gegenläufigen Gewindeenden in Muttergewinde des Spannschlosses eingreifen. Zur Verhinderung der Drehung des Kugelzapfens beim Einstellen der Spur greifen die Enden der beiden Teile der Spurstange innerhalb der Gewindemutter mit einem komplementären, polygonalen Querschnittsprofil axial verschieblich ineinander. Dieses Querschnittsprofil ist jedoch vorzugsweise symmetrisch zum Koordinatenkreuz ausgebildet, um die Lage der Kehle am Übergang des Kugelzapfens in die Gelenkkugel ausrichten zu können. Dadurch ist es möglich, die Lage der Kehle gegenüber der abknickenden Längsachse einer gegebenenfalls ungeraden Spurstange einstellen zu können.

In der Zeichnung ist ein Ausführungsbeispiel der Erfindung dargestellt. Es zeigen:
- Figur 1: die Schnittverläufe B, C, D, E, F, G in Figur 2
- Figur 2: eine Darstellung eines Teiles einer zweiteiligen Spurstange mit einem Schnitt durch das Axialgelenk und
- Figur 3: einen Schnitt nach der Linie A - A in Figur 2.

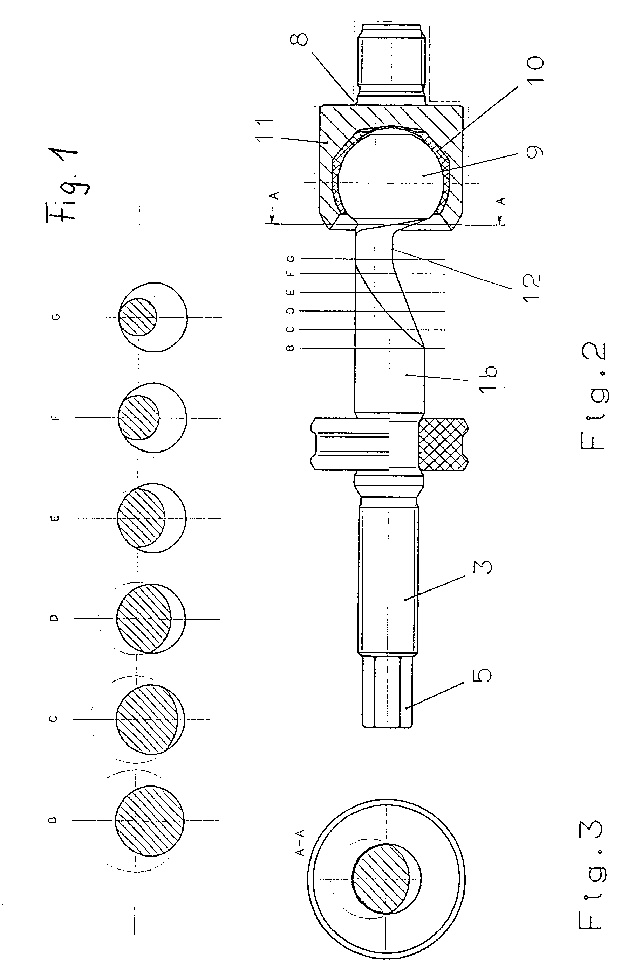

Dargestellt ist eine Spurstange 1 von deren zwei Teilen nur das Teil 1b, gezeigt ist. Die einander zugekehrten Enden der Teile sind mit einem jeweils gegenläufigen Gewinde in ein Muttergewinde einer Spannschraube verschraubbar. An dem einen Ende 3 des Spurstangenteiles 1b, erstreckt sich axial ein Profilzapfen 5, der in eine komplementär profilierte Bohrung des Endes des anderen Spurstangenteiles axial verschieblich eingreift, so daß zwischen den beiden Spurstangenteilen eine zwar axial bewegliche, jedoch drehfeste Verbindung besteht. Das freie Ende des nicht gezeigten Spurstangenteiles ist mittels eines Kugelgelenks an einem Kraftfahrzeugteil befestigbar. Das freie Ende des Spurstangenteiles 1b, ist mittels eines Axialgelenkes 8 an einem anderen Kraftfahrzeugteil befestigbar. Eine an dem Ende des Spurstangenteiles 1b, ausgebildete Gelenkkugel 9 ist mittels einer Lagerschale 10 in einem Gehäuse 11 um den Mittelpunkt der Gelenkkugel 9 allseits schwenkbar gelagert. Durch spanlose Verformung oder vorzugsweise durch eine asymmetrische Bearbeitung ( ist am Übergang des Spurstangenteiles 1b, in die Gelenkkugel 9 eine Kehle 12 ausgebildet, so daß das Spurstangenteil 1b, in den in Figur 1 angegebenen Schnittebenen B, C, D, E, F und G ein zur Längsachse des Spurstangenteiles 1b exzentrisch bzw. asymmetrisch angeordnetes Querschnittsprofil aufweist, wie es in der Figur 1 zeichnerisch dargestellt ist. Die Lage der Kehle 12 gegenüber dem nicht gezeigten Spurstangenteil kann durch Umstecken des Profilzapfens 5 in dem Profil der Ausnehmung verändert werden, wozu das Schraubgewinde an den Enden der Spurstangenteile aus dem Muttergewinde der Spannschraube herausgedreht wird. Dadurch wird eine korrekte Stellung des asymmetrischen Kugelzapfens gegenüber dem Befestigungselement (Kugelgelenk) am freien Ende des nicht gezeigten Spurstangenteiles ermöglicht.

## Patentansprüche

1. Spurstange für Kraftfahrzeuge, deren eines Ende eine Gelenkkugel aufweist, die am Ende der Spurstange ausgebildet ist, so daß die Längsachse der Spurstange durch die Mitte der Gelenkkugel verläuft, wobei die Spurstange mittels eines axial belastbaren Kugelgelenks befestigbar ist,
dadurch gekennzeichnet, daß
die Spurstange (1) vor dem Übergang in die Gelenkkugel (9) mit einem zur Längsachse der Spurstange (1) und der Gelenkkugel (9) exzentrisch angeordneten Querschnittsprofil eine Kehle (12) bildet.

2. Spurstange nach Anspruch 1,
dadurch gekennzeichnet, daß
zwei Spurstangenteile innerhalb einer auf gegenläufige Gewinde der benachbarten Enden beider Teile verschraubbaren Spannschraube eines Spannschlosses zur Längenverstellung axial verschieblich und drehfest ineinandergreifen.

3. Spurstange nach Anspruch 2, dadurch gekennzeichnet, daß die Enden der beiden Spurstangenteile innerhalb der Spannschraube mit einem komplementär polygonalen Querschnittsprofil axial verschieblich ineinandergreifen.

4. Spurstange nach Anspruch 3, dadurch gekennzeichnet, daß die beiden Spurstangenteile mit einem im Querschnitt symmetrischen Profil axial verschieblich ineinandergreifen.

5. Spurstange nach einem der vorhergehenden Ansprüche, dadurch gekennzeichnet, daß die Lage der Kehle (12) gegenüber der abknickenden Längsachse einer ungeraden Spurstange einstellbar ist.

## Claims

1. A track rod for motor vehicles, one end of which comprises the ball of a ball-and-socket joint, which joint ball is constructed at the end of the track rod in such a way that the longitudinal axis of the track rod passes through the centre of the joint ball, the track rod being securable by means of an axially loadable ball-and-socket joint,
characterised in that
the track rod (1), having a cross sectional profile disposed eccentrically with respect to the longitudinal axis of the track rod (1) and the joint ball (9), forms a groove (12) before developing into the joint ball (9).

2. A track rod according to claim 1,
characterised in that
two track rod portions interlock axially displaceably, for the purpose of lengthwise adjustment, and non-rotatably within a locking screw of a screw shackle, which locking screw may be screwed onto opposing threads on the adjacent ends of the two portions.

3. A track rod according to claim 2,
characterised in that
the ends of the two track rod portions interlock axially displaceably inside the locking screw by means of a complementary polygonal cross-sectional profile.

4. A track rod according to claim 3,
characterised in that
the two track rod portions interlock axially displaceably by means of a profile of symmetrical cross section.

5. A track rod according to any one of the preceding claims,
characterised in that
the position of the groove (12) may be adjusted relative to the bent longitudinal axis of a non-rectilinear track rod.

## Revendications

1. Barre d'accouplement pour direction de véhicules à moteur, dont une extrémité présente une rotule d'articulation qui est formée à l'extrémité de la barre d'accouplement de sorte que l'axe longitudinal de la barre d'accouplement passe par le centre de la rotule, la barre d'accouplement pouvant être fixée au moyen d'une articulation à rotule pouvant être chargée axialement, caractérisée en ce que la barre d'accouplement (1) forme avant la transition dans la rotule (9), une gorge (12) ayant un profil de section transversale agencée excentriquement par rapport à l'axe longitudinal de la barre d'accouplement (1) et à la rotule (9).

2. Barre d'accouplement selon la revendication 1, caractérisée en ce que deux pièces de barre d'accouplement sont en prise mutuelle, de façon à pouvoir coulisser axialement et sans rotation possible, pour un réglage de longueur, à l'intérieur d'une vis tendeuse d'un tendeur, laquelle peut être vissée sur des filets contraires des extrémités voisines des deux pièces.

3. Barre d'accouplement selon la revendication 2, caractérisée en ce que les extrémités des deux pièces de barre d'accouplement sont en prise mutuelle de façon à pouvoir coulisser axialement, à l'intérieur de la vis tendeuse, avec des profils polygonaux de sections transversales complémentaires.

4. Barre d'accouplement selon la revendication 3, caractérisée en ce que les deux pièces de barre d'accouplement sont en prise mutuelle de façon à pouvoir coulisser axialement avec des profils de sections transversales symétriques.

5. Barre d'accouplement selon l'une quelconque des revendications précédentes, caractérisée en ce que la position de la gorge (12) peut être réglée par rapport à l'axe longitudinal désaxé d'une barre d'accouplement non droite.
